**Europäisches Patentamt**

**European Patent Office**

**Office européen des brevets**

(19)

(11) Veröffentlichungsnummer: **0 348 397 B1**

(12) # EUROPÄISCHE PATENTSCHRIFT

(45) Veröffentlichungstag der Patentschrift:
11.09.91 Patentblatt 91/37

(51) Int. Cl.⁵: **B62K 15/00**

(21) Anmeldenummer: 88901017.9

(22) Anmeldetag: 21.01.88

(86) Internationale Anmeldenummer:
PCT/DE88/00030

(87) Internationale Veröffentlichungsnummer:
WO 88/05394 28.07.88 Gazette 88/17

(54) **FALTBARES ZWEIRÄDRIGES FAHRRAD.**

(30) Priorität: 22.01.87 DE 3701803

(43) Veröffentlichungstag der Anmeldung:
03.01.90 Patentblatt 90/01

(45) Bekanntmachung des Hinweises auf die
Patenterteilung:
11.09.91 Patentblatt 91/37

(84) Benannte Vertragsstaaten:
BE CH DE FR GB IT LI NL

(56) Entgegenhaltungen:
BE-A- 628 783
DE-C- 504 805
GB-A- 415 843

(73) Patentinhaber: BOGEN, Ulrich
Veitsbronner Str. 5
W-8522 Herzogenaurach (DE)

(72) Erfinder: BOGEN, Ulrich
Veitsbronner Str. 5
W-8522 Herzogenaurach (DE)

(74) Vertreter: Haft, Berngruber, Czybulka
Postfach 14 02 46 Hans-Sachs-Strasse 5
W-8000 München 5 (DE)

## Beschreibung

Die Erfindung bezieht sich auf ein zweirädriges Fahrrad mit einem faltbaren Rahmen.

Aus der DE-OS 1810445 ist ein Fahrrad bekannt, das einen Hauptrahmen aus einem Vorderrohr und einem Sitzrohr aufweist. In dem Sitzrohr ist dabei ein den Sattel tragendes Sattelrohr verschiebbar gelagert. Im Bereich des Verbindungspunktes zwischen Vorderrohr und Sitzrohr ist ein Tretlager angeordnet. Ferner ist eine das Hinterrad aufnehmende, am Hauptrahmen um ein koaxial zum Tretlager angeordnetes Schwenklager verschwenkbar befestigte Hinterradschwinge vorgesehen. Diese Hinterradschwinge kann durch das nach unten geschobene Sattelrohr in ihrer Lage arretiert werden, wobei dieses Sattelrohr mit einem Festhaltestück auf seiten der Hinterradschwinge zusammenwirkt. Zum Zusammenklappen des Fahrrads wird das Sattelrohr im Sitzrohr nach oben gezogen, so daß die Verbindung zwischen Sattelrohr und Hinterradschwinge aufgehoben werden kann. Die Hinterradschwinge kann dann nach Entfernen des Hinterrades im Gegenuhrzeigersinn in Richtung auf das Sattelrohr geklappt werden.

Eine zufriedenstellende Fahrstabilität bei Geradeauslauf und bei Kurvenfahrten und ein zufriedenstellender Fahrkomfort kann mit einer solchen Konstruktion eines faltbaren Fahrrades nicht erreicht werden. Hierzu wären spielfreie Verbindungen insbesondere zwischen Sitzrohr und Sattelrohr sowie zwischen Sattelrohr und Hinterradschwinge nötig. Außerdem ist durch das kraftaufwendige Herausziehen des Mittelrohres aus dem Sitzrohr das Zusammenfalten dieses Fahrrades umständlich. Nachteilig ist darüber hinaus ein durch die Bauform bedingtes hohes Gewicht sowie die verbleibende Sperrigkeit des zusammengefalteten Fahrrades.

In der US-PS 4441729 ist ein faltbares Fahrrad beschrieben, dessen Rahmen aus zwei Teilrahmen besteht. Der vordere Teilrahmen umfaßt dabei die Gabel für das Vorderrad mit dem Gabelrohr, zwei parallel, mit Abstand zueinander angeordnete obere Rahmenrohr und zwei ebenfalls mit Abstand angeordnete untere Rahmenrohre. Der hintere Teilrahmen ist aus dem Satttelrohr, an dessen unterem Ende das Tretlager befestigt ist, eine an dem Tretlager befestigten Hinterradschwinge und einer das Ende der Hinterradschwinge mit dem oberen Rahmen des Sattelrohres verbindenden Hinterradstrebe zusammengesetzt. Dem hinteren Ende der unteren Rahmenrohre des vorderen Teilrades sind auf der Tretlagerachse verschwenkbar befestigt, während die oberen Rahmenrohre am oberen Ende des Sattelrohres lösbar befestigt sind.

Zum Zusammenklappen des Fahrrades wird die Verbindung zwischen den oberen Rahmenrohren und dem Sattelrohr gelöst. Außerdem wird der Sattel aus dem Sattelrohr entfernt. Anschließend kann der hintere Teilrahmen um die Tretlagerachse im Uhrzeigersinn verschwenkt werden, wobei das Hinterrad in die Zwischenräume zwischen dem oberen und unteren Rahmen eintaucht. Um dieses Eintauchen zu ermöglichen, muß der vordere Rahmen als breiter Doppelrahmen ausgebildet werden, so daß nicht ausgeschlossen werden kann, daß beim Fahren der Fahrradfahrer mit den Innenseiten seiner Oberschenkel und auch mit den Knien in Kontakt mit den oberen Rahmenrohren kommt.

Außerdem ist die Aufteilung des Rahmens in der angegebenen Art ungünstig für die Fahreigenschaften im Geradeauslauf und bei Kurvenfahrten. Der Rahmen ist durch die Verwendung der Doppelrohre relativ torsionsweich und kann nur durch Verwendung hochwertiger Materialien sowie zusätzlicher Stützen zureichend steif und bruchfest gemacht werden. Eine Schwachstelle ist ferner die Verbindung der unteren Rahmenrohre am Tretlager. Da auch diese Verbindung eine Schwenkverbindung ist, muß diese absolut spielfrei gestaltet werden, wenn unsichere Laufeigenschaften vermieden werden sollen.

Des weiteren ist auch diese Sonderkonstruktion eines faltbaren Fahrrades relativ schwer, erfordert hohen Fertigungsaufwand und benötigt immer noch einen relativ großen für den Transport im Kofferraum zu großen Stauraum.

Aus der britischen Patentschrift 415843 ist ein Fahrradrahmen bekannt, der zur Erleichterung des Transportes von einer Zulieferfirma zu dem Fahrradhersteller zusammengefaltet werden kann. Dieser Rahmen kann jedoch nicht in Verbindung mit faltbaren Fahrrädern eingesetzt werden, da die Einzelteile dieses Rahmens nur mit Spezialwerkzeugen zum Demontieren gelöst werden können und außerdem die Stellen, an denen diese Spezialwerkzeuge angesetzt werden, beim zusammengebauten Fahrrad zumindest teilweise nicht mehr zugänglich sind.

Des weiteren sind Sonderkonstruktionen für Klappfahrräder mit kleinen, speziell konstruierten Rahmen und kleinen Rädern bekannt. Ein Beispiel sind die sogenannten Bickerton- Fahrräder (Frankfurter Allgemeine Zeitung vom 18. Oktober 1978, Nummer 230, Seite 34), die zwar sehr klein zusammenzufalten sind, jedoch wegen der torsionsweichen Konstruktion nur ungenügende Fahreigenschaften haben, so daß sie lediglich als Zweitfahrräder betrachtet werden können.

Eine weitere Sonderkonstruktion für zerlegbare Fahrräder sind die sogenannten Moulton-Fahrräder (Frankfurter Allgemeine Zeitung vom 9. November 1983, Nummer 261, Seite 37), die einen steifen, auf Dreieckskonstruktionen beruhenden Rahmen und sogar Federungen für Hinter- und Vorderrad aufweisen. Diese hochwertige, aber damit auch aufwendige und teure Sonderkonstruktion kann tatsächlich Fahrleistungen bieten, die mit üblichen Sport- oder Rennrädern vergleichbar sind. Allerdings benötigt das in zwei Teile zerlegte Fahrrad noch einen relativ großen Stauraum von ca. 105 mal 80 Zentimetern.

Bei anderen faltbaren Fahrrädern wird das Aussehen herkömmlicher Konstruktionen angestrebt, also Konstruktionen mit Dreiecksrahmen oder Damenrahmen mit Rahmenhöhen um 60 Zentimeter und Rädern mit vergleichbaren Durchmessern. Als Beispiele seien Fahrräder gemäß der DE-PS 504805 und des DE-GM 1905388 genannt. Das Zusammenfalten solcher Fahrräder erfordert teilweise erheblichen Aufwand, weil Seilzüge, Gangschaltungen oder Felgenbremsen vor dem Zusammenklappen entfernt werden müssen.

Eine interessante Entwicklung ist in der Zeitschrift Radfahren, Nr. 1, 1987, Seiten 26ff, beschrieben. Ausgehend von einem normalen Damenfahrrad sind bei dieser Konstruktion die vorderen, in der Rahmenebene nach unten verlaufenden beiden Rahmenrohre etwa in der Mitte ihrer Länge aufgetrennt und können mit einem Spannschloß verbunden und gelöst werden. In den Rahmenrohren sind die notwendigen Seilzüge und Lichtleitungen verlegt und an der Trennstelle mit Kupplungen versehen, die beim zusammengebauten Fahrrad ineinandergreifen. Diese Konstruktion erfordert eine aufwendige Fertigung, insbesondere im Bereich der Trennstelle in den beiden Rahmenrohren. Durch die Lage dieser Trennstelle ist jedoch auch der hintere Rahmenteil relativ grob, so daß die Unterbringung des zerlegten Fahrrades etwa in einem Kofferraum eines Autos problematisch wird. Außerdem ist ein paßgenaues Zusammensetzen der Rahmenteile nur mit Geduld möglich.

Aus der BE-A-628783 ist ein faltbares Fahrrad bekannt, dessen Hinterradschwinge um ein koaxial zum Tretlager angeordnetes Schwenklager in Richtung auf die Vorderradgabel ohne Entfernen der Antriebsvorrichtung für das Hinterrad verschwenkbar ist. Das Hinterrad wird hierbei beim Zusammenfalten des Fahrrades mit verschwenkt, so daß der Hauptrahmen zwischen Sattel- und Steuerrohr als Doppelrohrrahmen ausgefertigt ist, in den das Hinterrad beim Zusammenklappen eintaucht. Solche Doppelrohrrahmen haben jedoch eine relativ große Breite, so daß das Fahren auf dem Fahrrad erschwert wird und sogar Verletzungsgefahr, z.B. durch Anstoßen der Fußgelenke beim Treten, besteht.

Der Hinterbau dieses bekannten Fahrrades besteht aus der Hinterradschwinge und einer an deren hinterem Ende unter einem spitzen Winkel fest verbundenen Hinterradstrebe, deren vorderes Ende mit dem Sattelrohr des Hauptrahmens verbindbar bzw. zum Zusammenfalten des Fahrrades lösbar ist. Die Abstützung des Hinterbaus des Fahrrades erfolgt beim Fahren somit über ein statisch ungünstiges spitzwinkliges Dreieck mit sehr hohen, auf das Sattelrohr wirkenden Druck- und Biegekräften. Die Konstruktion des gesamten Rahmens ist somit sehr weich, so daß nur ungünstige Fahreigenschaften erzielt werden. Um diese Nachteile zumindest zu reduzieren, muß der Hinterbau dieses bekannten Fahrrades sehr massiv ausgeführt werden. Um die erforderliche Stabilität zu erreichen, wären dann nur Verbindungstechniken wie Löten oder Schweißen mit den entsprechenden Schwierigkeiten einer präzisen Fertigung möglich. Außerdem wäre eine Reparatur, z.B. ein Auswechseln von Teilen, entweder gar nicht oder nur mit erheblichem Aufwand möglich.

Bei dem bekannten Fahrrad verlaufen zudem die Kabelzüge entlang des das Steuer- und Sattelrohr verbindenden Rahmenrohres und werden anschließend entlang der Hinterradstrebe z.B. zu einer Hinterradbremse, einer Schaltung oder dgl. geführt. Da beim Verschwenken des Hinterbaus in Richtung auf das Steuerrohr diese Seilzüge nicht aufgetrennt werden, müssen sie im Bereich der lösbaren Verbindung der Hinterradstrebe am Sattelrohr in einem relativ großen Buckel frei geführt sein, der dann beim Fahren entsprechend hinderlich ist. Eine andere Verlegung der Seilzüge, z.B. über das Tretlager, ist bei der angegebenen Konstruktion nicht möglich, da diese dann so scharf abgeknickt werden müßten, daß eine Betätigung praktisch nicht mehr möglich ist.

Der Erfindung liegt die Aufgabe zugrunde, ein faltbares Fahrrad anzugeben, bei dem der Rahmen in Größe und Steifigkeit einem Rahmen von Fahrrädern üblicher Konstruktion entspricht, so daß das Fahrrad entsprechend gute Laufeigenschaften hat. Außerdem soll nur ein minimaler Stauraum für das gefaltete Fahrrad benötigt werden und das Falten und Entfalten ohne Werkzeuge einfach und rasch sein. Das Fahrrad sollte ferner ohne großen fertigungstechnischen Aufwand herzustellen sein.

Erreicht wird dies dadurch, daß bei einem Hauptrahmen herkömmlicher Konstruktion, also einem Dreiecksrahmen bei Herrenfahrräder oder einem Doppelrohrrahmen bei Damenfahrrädern, die um das Tretlager koaxial schwenkbare Hinterradschwinge mit dem Hauptrahmen durch eine Hinterradstrebe verbunden ist, wobei eine der beiden Verbindungen der Hinterradstrebe — oben am Sattelrohr oder unten an der Hinterradschwinge — auftrennbar ist. Anschließend kann die Hinterradschwinge nach Entfernen des Hinterrades in Richtung auf die Vorderradgabel verschwenkt werden, ohne daß etwa der Zahnkranz am Tretlager oder die Zahnkränze am Hinterrad mitsamt der Kette bzw. ein sonstiger Hinterradantrieb, wie ein Gelenkwellenantrieb, entfernt werden müßten.

Der Hauptrahmen eines Fahrrades gemäß der Erfindung ist wie bei herkömmlichen Rädern eine einteilige Konstruktion, die dem Fahrrad speziell zwischen den kritischen Krafteinleitpunkten (Pedale, Lenker, Sattel) eine hohe Grundsteifigkeit gibt. Die Hinterradschwinge umfaßt das Tretlager bevorzugt zu beiden Seiten, wodurch sich eine besonders steife, spielfreie und konstruktiv einfache Verbindung ergibt. Insgesamt entspre-

3

chen die Laufeigenschaften eines Fahrrades gemäß der Erfindung denjenigen herkömmlicher Sport- und Rennrädern.

Durch die einfache Faltmechanik ist ein Fahrrad gemäß der Erfindung nur unwesentlich schwerer als ein herkömmliches Fahrrad. Das Fahrrad kann ohne jedes Werkzeug zusammengefaltet werden. Durch Verschwenkung der Hinterradschwinge koaxial zum Tretlager verändert sich die relative Lage eines Antriebes zwischen Tretlager und Hinterradachse nicht, so daß bei einem Zahnradantrieb mit einer Kette die Kettenspannung unverändert bleibt und auch Gelenkwellenantriebe problemlos verwendet werden können. Eingesetzt werden dazu marktgängige Hinterradnaben, bei denen mit Schnellspannhebeln nur das Hinterrad gelöst wird, während Zahnräder, Schaltung und Kette bzw. ein sonstiger Antriebsstrang mit der Hinterradschwinge fest verbunden bleiben. Etwaige Seilzüge, so z.B. Züge für eine Hinterrad-Zahnradschaltung, oder Lichtleitungen müssen lediglich so ausgeführt werden, daß sie der Schwenkung der Hinterradschwinge um das Tretlager folgen können. Ebenso unproblematisch können auch Tretlagerschaltungen oder eine Tretlagerrücktrittsbremse eingesetzt werden.

Das mit der Erfindung angegebene Fahrrad unterscheidet sich rein äußerlich kaum von Sport- und Rennrädern herkömmlicher Größe. Die angegebene Konstruktion kann natürlich auch auf Fahrräder mit kleineren Rahmen und Rädern oder sonstige Sonderkonstruktionen angewendet werden.

Mit der einfachen Faltmechanik gemäß der Erfindung läßt sich ein Fahrrad mit normaler Rahmengröße auf einen Raum zusammenfalten, der durch eine Fläche von ca. 80 mal 65 Zentimeter begrenzt wird. Das derart gefaltete Fahrrad kann im Kofferraum der meisten Automobile ohne Probleme verstaut werden. Der Stauraum kann noch verringert werden, wenn die Pedale an den Tretkurbeln mit einer Steckverbindung befestigt sind, so daß sie ohne Werkzeug abgenommen und gegebenenfalls an den Tretkurbeln nach innen umgesteckt werden können. Damit wird insgesamt die Reduktion des Stauraumes auf ein Viertel des ungefalteten Fahrrades erreicht.

Weitere Ausgestaltungen der Erfindung gehen aus den Unteransprüchen hervor.

Die Erfindung ist in Ausführungsbeispielen anhand der Zeichnung näher erläutert. In dieser stellen dar :

Figur 1    eine Ansicht eines faltbaren Fahrrades gemäß der Erfindung ;
Figur 2    eine teilweise geschnittene Aufsicht auf die Faltmechanik eines Fahrrades gemäß der Erfindung im Tretlagerbereich ;
Figur 3    eine Ansicht des Rahmens im gefalteten Zustand ;
Figur 4    eine Ansicht eines Hinterrahmens für ein faltbares Fahrrad gemäß der Erfindung mit einer Hinterradfederung ;
Figur 5    eine geschnittene Darstellung der Hinterradfederung des Fahrrades gemäß Figur 4 ;
Figur 6    eine teilweise geschnittene Ansicht eines Hinterrahmens für ein faltbares Fahrrad zur Darstellung einer anderen Ausführungsform einer Hinterradfederung ;
Figur 7    eine teilweise geschnittene Darstellung einer Steckverbindung zwischen Tretkurbel und Pedal für ein Fahrrad gemäß der Erfindung.

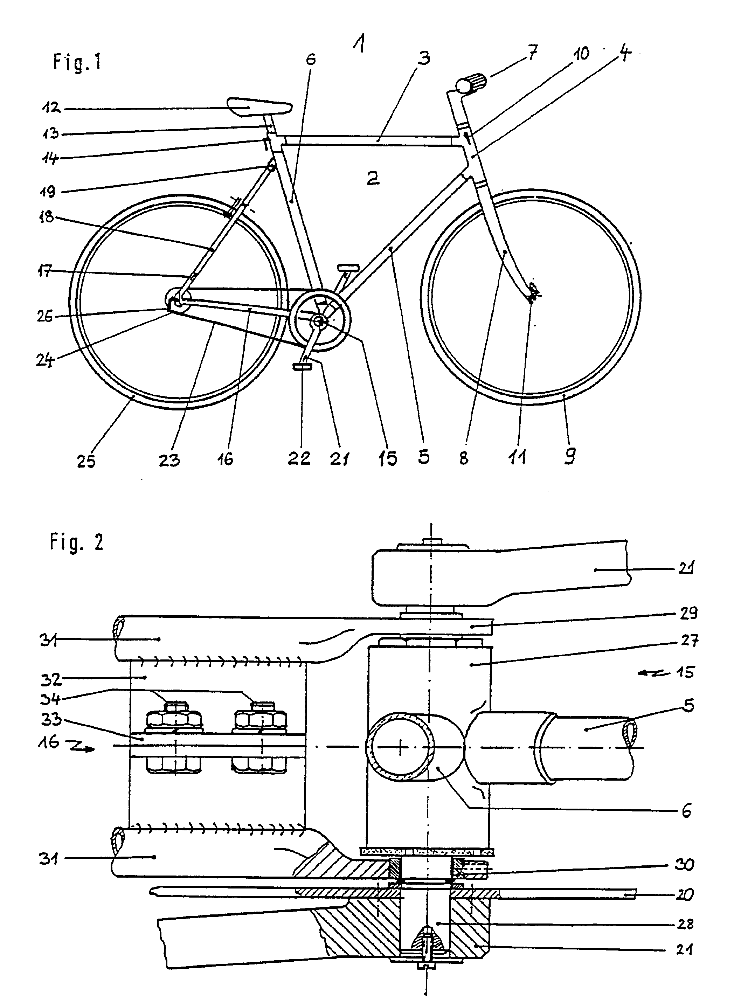

In Figur 1 ist ein Herrensportrad 1 dargestellt, das einen geschweißten Dreiecksrahmen 2 aus einem oberen Rahmenrohr 3, einem Lenkerrohr 4, einem unteren Rahmenrohr 5 und einem Sattelrohr 6 aufweist. In dem Lenkerrohr sind in herkömmlicher Weise ein Lenker 7 und eine Gabel 8 für ein Vorderrad 9 gelagert. Der Lenker 7 wird mit einem Schnellverschluß 10 in Höhe und Drehstellung fixiert. Das Vorderrad 9 ist in der Gabel 8 mit einem Nabenschnellverschluß 11 gehalten.

In das Sattelrohr 6 ist ein Sattel 12 mit seinem Stützrohr 13 eingesteckt ; in der Höhe wird der Sattel durch einen Schnellverschluß 14 fixiert.

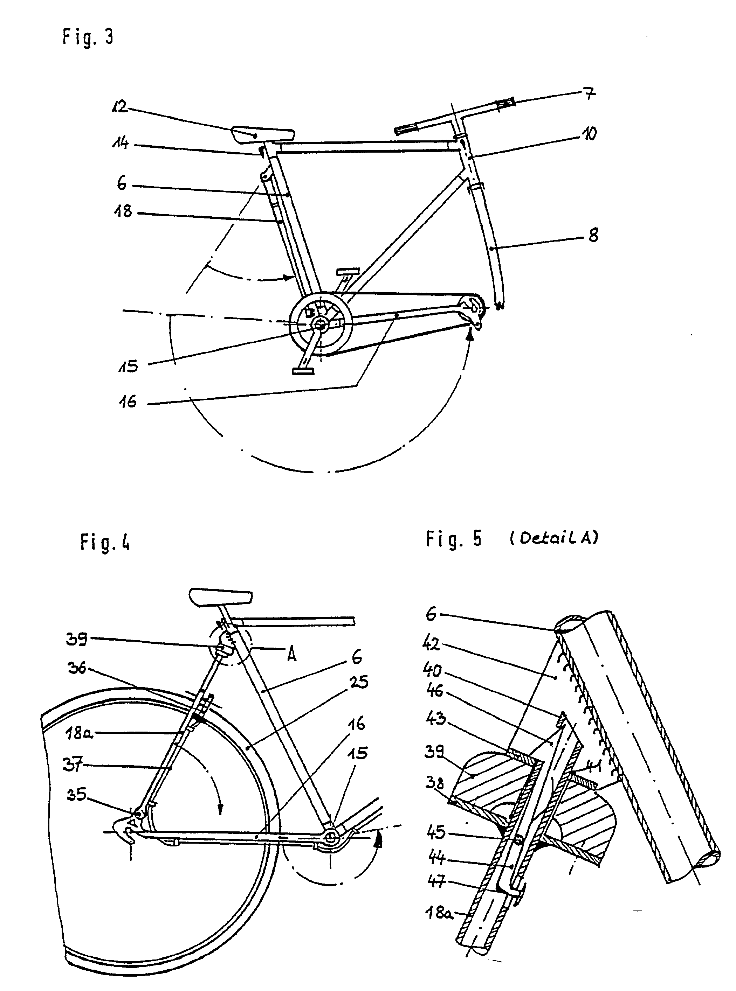

Die Rahmenrohre 5 und 6 sind in herkömmlicher Weise mit einem Tretlager 15 verschweißt, an dem, wie weiter unten zu Figur 3 beschrieben, eine Hinterradschwinge 16 angelenkt ist. Das hintere freie Ende der Hinterradschwinge 16 ist über eine Zapfenverbindung 17 mit einer Hinterradstrebe 18 verbunden, deren anderes Ende im oberen Bereich des Sattelrohrs 6 mit diesem bei 19 schwenkbar verbunden ist.

Mit dem Tretlager 15 sind ein Tretlagerzahnkranz 20 sowie zwei Tretkurbeln 21 mit Pedalen 22 verbunden. Über den Tretlagerzahnkranz läuft eine Kette 23, die in einen Zahnkranz 24 eines Hinterrades 25 eingreift, das am freien Ende der Hinterradschwinge 16 mit Hilfe eines Nabenschnellverschlusses 26 eingespannt ist.

Nicht gezeigt sind Schutzbleche für das Vorder- und Hinterrad, die in herkömmlicher Weise Steckschutzbleche sein können, ferner die Beleuchtung und eine Bremse für das Vorderrad. Diese Bauelemente sind in herkömmlicher Weise ausgeführt. Als Bremse für das Hinterrad ist eine Felgenbremse 36, 36a möglich.

Das Tretlager 15 (Figur 2) weist ein herkömmliches Tretlagergehäuse 27 auf, mit dem die Rahmenrohre 5 und 6 verschweißt sind. Auf den zu beiden Seiten des Tretlagergehäuses 27 herausragenden Wellenstümpfen einer Tretlagerwelle 28 ist zunächst jeweils ein Arm 29 der Hinterradschwinge 16 mit Hilfe jeweils eines

4

Gleit- oder Wälzlagers 30 gelagert. Anschließend sind in herkömmlicher Weise (Keil oder Vierkant) auf der Tretlagerwelle der Tretlagerzahnkranz 20 und die Tretkurbeln 21 befestigt. Die Arme 29 sind Endstücke von Rohren 31 der in diesem Falle zweirohrigen Hinterradschwinge. Diese Rohre weisen jeweils eine angeschweißte Platte 32 mit einem Flansch 33 auf. Die aneinander anliegenden Flansche 33 der beiden Rohre werden mit Schrauben 34 fest verbunden.

Um das Fahrrad aus der in Figur 1 gezeigten Fahrposition in die gefaltete Position gemäß Figur 3 zu bringen, wird folgendermaßen vorgegangen :

Durch Lösen der Nabenschnellverschlüsse 11 und 26 werden Vorder- und Hinterrad 9 bzw. 25 entfernt. Durch Lösen des Schnellverschlusses 14 wird das Stützrohr 13 des Sattels 12 in das Sattelrohr eingeschoben. Durch Lösen des Schnellverschlusses 10 wird der Lenker 7 in das Lenkerrohr 4 eingeschoben und nach erneutem Feststellen des Schnellverschlusses 10 gemeinsam mit der Gabel 8 um 90° oder 180° gedreht. Anschließend wird die Hinterradschwinge nach vorne in Richtung auf die Gabel geschwenkt. Dazu sind die Hinterradstreben entweder oben am Sattelrohr 19 oder unten ar der Hinterradschwinge 17 zu lösen. Wie aus Figur 3 ersichtlich, ist für das derart gefaltete Fahrrad flächenmäßig nur ein Drittel des Platzes wie für das Fahrrad in Fahrposition gemäß Figur 1 notwendig.

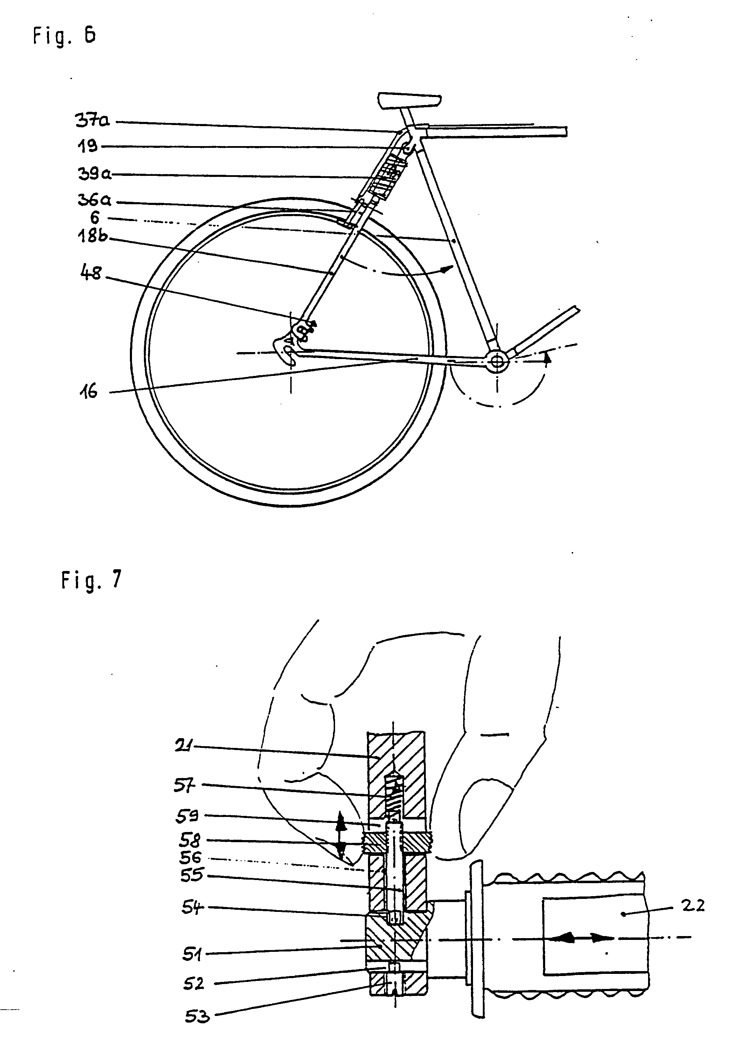

In den Figuren 4 und 5 ist schematisch eine Ausführungsform dargestellt, bei der die Hinterradstrebe 18a mit ihren Gabelenden 35 schwenkbar mit der Hinterradschwinge 16 verbunden ist. Im oberen Gabelbereich ist noch eine Felgenbremse 36 vorgesehen, deren Seilzug 37 längs der Hinterradstrebe 18a zu der Hinterradschwinge 16 geführt ist. Im oberen Bereich der Hinterradstrebe 18a ist eine Stützplatte 38 angeschweißt, die mit einem stoßdämmenden Block, z.B. einem Gummiblock 39 verbunden ist. Die Hinterradstrebe 18a endet in einem, den Gummibock 39 durchstossenden Zapfen 40, der in eine Bohrung 41 eines mit dem Sattelrohr 6 verschweißten Lagerbockes 42 eintaucht. In dieser Stellung legt sich der Gummiblock 39 an eine Abschlußplatte 43 des Lagerbockes 42 an. In dem Zapfen 40 der Hinterradstrebe 18a ist eine Sperrklinke 44 um eine Achse 45 gelagert, deren Sperriegel 46 in der Fahrposition die Abschlußplatte 43 des Lagerbockes hintergreift und somit die Hinterradstrebe 18a in der gezeigten Stellung hält. Die Sperrklinke 44 weist auf der anderen Seite der Achse 45 einen Sperrknopf 47 auf, der durch die Wand des Rohres der Hinterradschwinge herausragt. Durch Drücken dieses Knopfes kann die Verriegelung zwischen Hinterradstrebe 18a und Lagerbock 42 aufgehoben werden. Auf das Hinterrad wirkende Stöße werden durch den Gummiblock 39 abgefedert und gedämpft.

Zum Zusammenklappen des Fahrrades gemäß den Figuren 4 und 5 wird nach Entfernen der Räder die Sperrklinke 44 gelöst und die Hinterradschwinge 18a in Richtung auf die Hinterradschwinge 16 geklappt. Die Hinterradschwinge 16 wird dann gemeinsam mit der Hinterradstrebe 18a im Gegenuhrzeigersinn um das Tretlager 15 geschwenkt.

Bei der Ausführungsform gemäß Figur 6 ist eine modifizierte Hinterradfederung vorgesehen. Hierzu ist die Hinterradstrebe 18b wie beim Ausführungsbeispiel gemäß Figur 1 bei 19 am Sattelrohr 6 gelagert. Die beiden Enden des gabelförmigen Teiles der Hinterradstrebe sind über einen Sicherungsstift 48 mit den Enden der Hinterradschwinge 16 verbunden. Im oberen Gabelbereich der Hinterradschwinge 18b ist eine Felgenbremse 36a vorgesehen, deren Seilzug 37a längs der Hinterradstrebe 18b in Richtung auf das obere Rahmenrohr 3 geführt ist.

Im Bereich zwischen der sattelrohrseitigen Befestigung 19 und der Felgenbremse 36a ist ein Feder/Dämpfungselement 39a in die Hinterradstrebe integriert. Dieses Element kann wie angedeutet etwa eine Teleskopfeder oder auch ein Gummi-Stoßdämpfer sein.

Zum Zusammenklappen des Fahrrades wird ein Sicherungsstift 48 gezogen, die Strebe 18b an das Sattelrohr 6 angeklappt und anschließend wie beschrieben die Hinterradschwinge 16 im Gegenuhrzeigersinn geschwenkt. Sattel sowie Lenker mit Gabel werden wie oben eingerichtet. Das gefaltete Fahrrad benötigt einen Stauraum, dessen Fläche kaum größer als diejenige eines Rades ist.

Zur weiteren Verringerung des Stauraumes des zusammengeklappten Fahrrades und zur besseren Handhabung können gemäß Figur 7 die Pedale 22 entfernt und umgesteckt werden. Das Pedal 22 ist für die Befestigung mit der Tretkurbel 21 mit einem glatten Zapfen 51 anstelle des herkömmlichen Gewindes ausgerüstet. Der Zapfen 51 weist eine Längsnut 52 auf, in die eine Justierschraube 53 der Tretkurbel eingreift. Auf der gegenüberliegenden Seite ist der Zapfen 51 mit einer Bohrung 54 versehen, in die ein federgestützter Bolzen 55 eingreift, der in einer Längsbohrung 56 der Tretkurbel 21 gelagert ist. Die Federstützung erfolgt mit einer Zylinderfeder 57. Mit dem Bolzen 55 ist ein Schieber 58 verbunden, der durch einen Spalt 59 in der Tretkurbel nach außen ragt. Der Bolzen 55 wird durch die Zylinderfeder 57 in der Rastposition gehalten, so daß das Pedal 22 arretiert wird. Durch Zurückziehen des Bolzens 45 mit Hilfe des Schiebers 58 wird die Steckverbindung zwischen Tretkurbel 21 und Pedal 22 gelöst, und das Pedal 22 kann aus der Tretkurbel herausgezogen werden. Anschließend kann das Pedal 22 von der Innenseite der Tretkurbel 21 in diese hineingesteckt werden.

EP 0 348 397 B1

**Patentansprüche**

1. Zweirädriges Fahrrad mit einem faltbaren Rahmen, der einen einteiligen, die Vorderradgabel und das Tretlager aufnehmenden Hauptrahmen und eine das Hinterrad aufnehmende, am Hauptrahmen um ein koaxial zum Tretlager angeordnetes Schwenklager verschwenkbar befestigte Hinterradschwinge, aufweist, die am Hauptrahmen durch eine mit dem Ende der Hinterradschwinge verbundene Hinterradstrebe abgestützt ist, wobei die Faltung des Rahmens nach Lösen einer trennbaren Befestigung am Rahmen durch Verschwenken der Hinterradschwinge in Richtung auf die Vordergabel unter Aufrechterhalten der Antriebsvorrichtung für das Hinterrad erfolgt, dadurch gekennzeichnet, daß die Hinterradstrebe (18, 18a, 18b) mit dem Hauptrahmen (2) am oberen Ende des Sattelrohres verbunden ist, wobei eine der beiden Verbindungen der Hinterradstrebe (18, 18a, 18b) an dem Hauptrahmen (2) bzw. an der Hinterradschwinge (16) die trennbare Befestigung (Zapfenverbindung 17, Sperrklinke 46) bildet und die jeweils andere Verbindung verschwenkbar ausgeführt ist, und daß die Hinterradschwinge (16) bei entferntem Hinterrad (25) verschwenkbar ist und aus zwei Rohren (31) aufgebaut ist, die zu beiden Seiten des Tretlagers (15) mit dem Schwenklager (30) fest verbunden sind und im Bereich des Tretlagers (15) über Abstandshalter (32, 33) und Schrauben (34) fest miteinander verbunden sind.

2. Fahrrad nach Anspruch 1, dadurch gekennzeichnet, daß das Schwenklager (30) für die Hinterradschwinge (16) ein Gleit- oder Wälzlager ist, das koaxial zum Tretlager (15) ist.

3. Fahrrad nach einem der vorhergehenden Ansprüche, dadurch gekennzeichnet, daß für die Hinterradstrebe (18a, 18b) eine in deren Längsrichtung wirkende Federung (39, 39a) vorgesehen ist.

4. Fahrrad nach einem der vorhergehenden Ansprüche, dadurch gekennzeichnet, daß mit dem Tretlager (15) Tretkurbeln (21) mit Pedalen (22) verbunden sind, wobei zwischen Pedalen (22) und Tretkurbeln (21) eine Steckverbindung (51 bis 59) vorgesehen ist, die eine lösbare Vorrichtung (55 bis 59) zum Arretieren der Pedale (22) in der eingesteckten Stellung aufweist.

5. Fahrrad nach Anspruch 4, dadurch gekennzeichnet, daß das Pedal (22) einen in die Tretkurbel (21) einsteckbaren Bolzen (51) aufweist, der in der Tretkurbel (21) in seiner Drehlage durch eine Zapfen-Nut-Verbindung (52, 53) und in seiner axialen Lage durch eine Riegel- Verbindung (54, 55) fixiert ist.


**Claims**

1. A two-wheel bicycle having a collapsible frame comprising a one-part main frame receiving the front-wheel fork and the pedal bearing, and a swing arm rear suspension receiving the rear wheel and pivoted to the main frame about a drag bearing disposed coaxially to the pedal bearing, said swing arm rear suspension being supported on the main frame by a rear wheel bar connected with the end of the rear suspension, the frame being collapsed after detachment of a separable attachment to the frame by swiveling the swing arm rear suspension toward the front fork while maintaining the drive means for the rear wheel, characterized in that the rear wheel bar (18, 18a, 18b) is connected with the main frame (2) at the upper end of the seat tube, whereby one of the two connections of the rear wheel bar (18, 18a, 18b) to the main frame (2) or to the swing arm rear suspension (16) forms the separable attachment (mortise joint 17, detent pawl 46) and the other connection is adapted to pivot, and the swing arm rear suspension (16) pivots when the rear wheel (25) is removed and is constructed of two tubes (31) which are firmly connected with the drag bearing (30) on both sides of the pedal bearing (15) and firmly interconnected via spacing means (32, 33) and screws (34) in the area of the pedal bearing (15).

2. The bicycle of claim 1, characterized in that the drag bearing (30) for the swing arm rear suspension (16) is a slide bearing or rolling bearing which is coaxial to the pedal bearing (15).

3. The bicycle of either of the preceding claims, characterized in that a spring system (39, 39a) acting in the longitudinal direction of the rear wheel bar (18a, 18b) is provided for the latter.

4. The bicycle of any of the preceding claims, characterized in that pedal cranks (21) with pedals (22) are connected with the pedal bearing (15), a plug connection (51 to 59) being provided between pedals (22) and pedal cranks (21) that has a detachable means (55 to 59) for locking the pedals (22) in the inserted position.

5. The bicycle of claim 4, characterized in that the pedal (22) has a pin (51) adapted to be inserted into the pedal crank (21) and fixed in the pedal crank (21) in its rotary position by a mortise and tenon joint (52, 53) and in its axial position by a pin joint (54, 55).


**Revendications**

1. Bicyclette à deux roues comportant un cadre pliable qui présente un cadre principal en une pièce conte-

6

EP 0 348 397 B1

nant la fourche de la roue avant et le palier du pédalier et la fourche du pédalier recevant la roue arrière et fixée pivotante sur le cadre principal autour d'un palier pivotant disposé coaxialement par rapport au palier du pédalier, ladite fourche du pédalier étant soutenue sur le cadre principal par une fourche arrière reliée à l'extrémité de la fourche du pédalier, le pliage du cadre étant effectué après le desserrage d'une fixation amovible sur le cadre, en pivotant la fourche du pédalier en direction de la fourche avant en maintenant le dispositif de commande pour la roue arrière, caractérisée en ce que la fourche arrière (18, 18a, 18b) est reliée au cadre principal (2) à l'extrémité supérieure du tube de la selle, une des deux liaisons de la fourche arrière (18, 18a, 18b) formant la fixation amovible sur le cadre principal (2) et la fourche du pédalier (16), respectivement, (assemblage à goujon 17, cliquet d'arrêt 46), et l'autre liaison étant construite pivotante, et en ce que la fourche du pédalier (16) est pivotable lorsque la roue arrière (25) est enlevée, la fourche du pédalier étant formée de deux tubes (31) qui sont fixés des deux côtés du palier du pédalier (15) au palier pivotant (30) et reliés l'un à l'autre dans la zone du palier de pédalier (15) au moyen d'écarteurs (32, 33) et de vis (34).

2. Bicyclette selon la revendication 1, caractérisée en ce que le palier pivotant (30) pour la fourche du pédalier (16) est un palier à glissement ou à roulement qui est coaxial par rapport au palier de pédalier (15).

3. Bicyclette selon l'une des revendications précédentes, caractérisée en ce qu'il est prévu pour la fourche arrière (18a, 18b) une suspension élastique (39, 39a) agissant dans sa direction longitudinale.

4. Bicyclette selon l'une des revendications précédentes, caractérisée en ce que des manivelles de pédalier (21) avec pédales (22) sont reliées au palier de pédalier (15), un raccordement en fiche (51 à 59) étant prévu entre les pédales (22) et les manivelles de pédalier (21), présentant un dispositif desserrable (55 à 59) pour bloquer les pédales (22) dans la position emboîtée.

5. Bicyclette selon la revendication 4, caractérisée en ce que la pédale (22) présente un boulon (54) enfichable dans la manivelle de pédalier (21), ledit boulon étant fixé dans la manivelle de pédalier dans sa position de pivotement par un assemblage de goujon et rainure (52, 53) et dans sa position axiale par un boulon de verrouillage (54, 55).

7

Fig. 1

Fig. 2

Fig. 3

Fig. 4    Fig. 5    (Detail A)

Fig. 6

37a
19
39a
36a
6
18b
48
16

Fig. 7

21
57
59
58
56
55
54
51
52
53

22